# EUROPEAN PATENT SPECIFICATION

(11) **EP 3 323 294 B1**
(45) Date of publication and mention of the grant of the patent: **09.06.2021**
(21) Application number: 17202214.7
(22) Date of filing: 17.11.2017
(51) Int. Cl.: A21C 5/00, G01G 11/08, G01G 17/02

(54) **WEIGHING, CUTTING AND ARRANGING SYSTEM**
WIEGE-, SCHNEID- UND ANORDNUNGSSYSTEM
SYSTÈME DE PESAGE, DE COUPE ET D'AGENCEMENT

(30) Priority: 22.11.2016 JP 2016226914
(43) Date of publication of application: 23.05.2018
(73) Proprietor: Rheon Automatic Machinery Co., Ltd., Utsunomiya-shi, Tochigi 320-0071 (JP)
(72) Inventor: Ueno, Hiroshi, Tochigi 3200071 (JP)
(74) Representative: SR Huebner - Munich Patent-und RechtsanwaltsPartG mbB

(56) References cited:
- WO-A1-01/60165
- DE-B1- 1 511 849
- GB-A- 1 587 715
- JP-A- 2003 304 799
- JP-A- 2006 129 784

## Description

### TECHNICAL FIELD

The present invention relates to a weighing, cutting and arranging system for doughs, such as bread dough. Specifically, the present invention relates to a weighing, cutting and arranging system which cuts dough with weighing and cutting devices disposed in multiple rows in a width direction and cut doughs are arranged and transferred in a single line.

### BACKGROUND ART

Conventionally, a weighing, cutting and arranging system, in which a dough deposited in a band-like form is separated into multiple rows, weighed and cut in each row, and the cut doughs in the respective rows are arranged in a single line, has been known (for example, see Patent Publication 1, JP 2003-304799 A).

Japanese Patent Publication JP 2006-129784 A discloses a system wherein two rows of dough are cut simultaneously. A weighing conveyors stop the dough at outlets and discharge the dough with a time delay.

### PRIOR ART PUBLICATION

Patent Publication 1: Japanese Patent Laid-open Publication No. 2003 - 304799
Patent Publication 2: Japanese Patent Laid-open Publication No. H11-289963
Patent Publication 3: Japanese Patent Laid-open Publication No. 2000-351440
Patent Publication 4: Japanese Patent Laid-open Publication No. 2006-129784

### SUMMARY OF THE INVENTION

### PROBLEM TO BE SOLVED BY THE INVENTION

When the cut doughs which are weighed and cut in the respective rows are arranged in the single line, if a space between the cut doughs is narrow, the plurality of cut doughs would adhere each other to integrate together in, for example, the following rounding device.

Further, in the weighing, cutting and arranging system described in the Patent Publication 1, since a weighing conveyor and an arranging conveyor are separately provided, a length of the weighing, cutting and arranging system becomes long.

Thus, an object of the present invention is to provide a weighing, cutting and arranging system in which a length of the weighing, cutting and arranging system can be shorten and a plurality of the cut doughs are prevented from adhering each other to integrate together.

### MEANS FOR SOLVING THE PROBLEM

In order to achieve the above-stated object, a weighing, cutting and arranging system according to claim 1 is provided. The system according to the present invention comprises a feeding section in which multiple rows of band-like doughs are fed; a weighing and cutting section in which the dough of each row is cut so as to have a predetermined weight; and a discharging section in which the cut doughs of the multiple rows are discharged in a single line; wherein each row of the weighing and cutting section has a shorter upstream conveyor with a weighing function, a longer downstream conveyor with a weighing function disposed downstream of the upstream conveyor, and a cutting device disposed upstream of and adjacent to the upstream conveyor, wherein one of the multiple rows is defined as a reference row, and wherein after the cut doughs of the all rows are stopped at outlets of the respective conveyors, the cut dough of the reference row is discharged, and after the cut dough of the reference row is discharged, the cut dough(s) of the other row(s) is/are discharged in a sequential order with a predetermined period.

In this weighing, cutting and arranging system, since the system has a function of stopping the cut dough at the outlets of the downstream conveyors, the downstream conveyors have not only a function of a weighing conveyor but also a function of an arranging conveyor. Thus, a length of the weighing, cutting and arranging system can be shortened.

Further, a time at which the cut doughs have been stopped at the outlets of the all downstream conveyors is defined as a reference timing, and then in the reference row, the cut dough which is stopped at the outlet of the downstream conveyor is discharged. In contrast, in the other rows rather than the reference row, the cut doughs which are stopped at the outlets of the downstream conveyors are discharged so as to have predetermined periods with respect to the above-stated reference timing. Thus, the cut doughs discharged from the downstream conveyors in the other rows are separated from each other by predetermined spaces based on the cut dough discharged from the reference row of the downstream conveyors, namely, they are discharged so as to have sufficient spaces between the cut doughs. Thus, the plurality of the cut doughs are prevented from adhering each other to integrate together.

In an embodiment of the present invention, preferably, when in one of the rows, the cut dough is stopped at the outlet of the downstream conveyor and the following dough is cut, the upstream conveyors of the all rows are stopped.

In this weighing, cutting and arranging system, when a length of the cut dough is shorter than a length of the upstream conveyor, since the cut dough is stopped at the outlet of the downstream conveyor and the upstream conveyors of the all rows are stopped, the upstream conveyor has not only a function of a weighing conveyor but also a function of an arranging conveyor. Thus, a length of the weighing, cutting and arranging system can be more shortened.

In an embodiment of the present invention, preferably, when in one of the rows, the cut dough is stopped at the outlet of the downstream conveyor and the following dough reaches the outlet of the upstream conveyor, the upstream conveyors of the all rows are stopped.

In this weighing, cutting and arranging system, when a length of the cut dough is longer than a length of the upstream conveyor, since the cut dough is stopped at the outlet of the downstream conveyor and the upstream conveyors of the all rows are stopped, the upstream conveyor has not only a function of a weighing conveyor but also a function of an arranging conveyor. Thus, a length of the weighing, cutting and arranging system can be more shortened.

As explained above, the weighing, cutting and arranging system according to the present invention allows a length of the weighing, cutting and arranging system to be shortened and can prevent the plurality of cut doughs from adhering each other to integrate together.

### BRIEF DESCRIPTION OF THE DRAWINGS

Fig. 1 is a schematic front view of a weighing, cutting and arranging system according to the present invention.
Fig. 2 is a schematic plan view of the weighing, cutting and arranging system shown in Fig. 1.
Fig. 3 is a flowchart for explaining a weighing and cutting operation.
Fig. 4 is a flowchart for explaining an operation of the first-row weighing and cutting section.
Fig. 5 is a flowchart for explaining an operation of the second-row weighing and cutting section.

### DESCRIPTION OF EMBODIMENTS

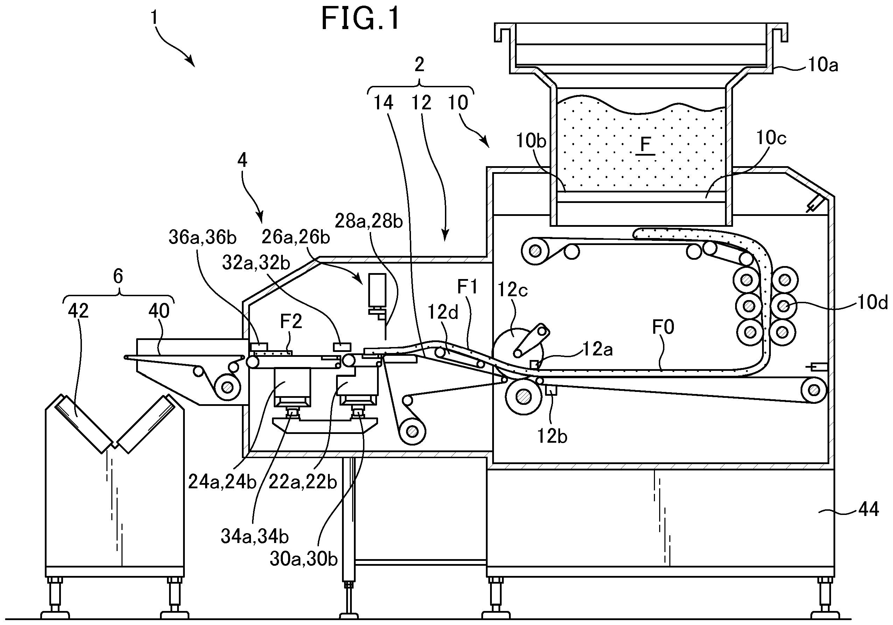

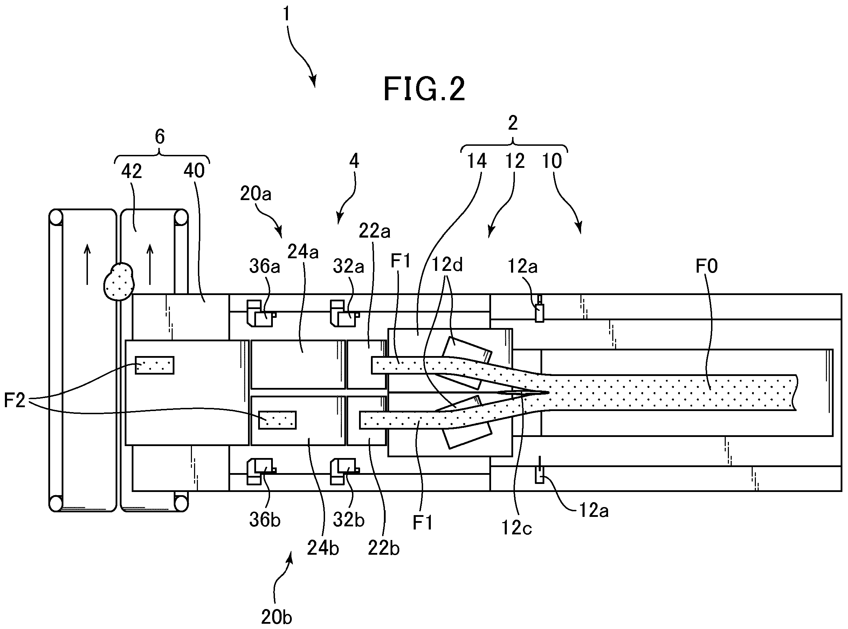

As shown in Figs. 1 and 2, a weighing, cutting and arranging system 1 according to the present invention has a feeding section 2 in which multiple rows of band-like doughs F1 are fed, a weighing and cutting section 4 in which each row of the dough F1 is cut so as to have a predetermined weight, and a discharging section 6 in which the cut doughs F2 of the multiple rows are arranged in a single line.

The feeding section 2 has a dough depositing part 10 in which a band-like dough F0 is deposited so as to have a predetermined width and a predetermined thickness, a cutting and separating device 12 in which the deposited dough F0 is divided into two rows in a width direction and the divided doughs F1 are separated from each other in the width direction, and a feeding conveyor 14 in which the separated doughs F1 are fed to the weighing and cutting section 4. The dough F0 is, for example, a bread dough.

The dough depositing part 10 has a hopper 10a, an opening 10b provided in a lower portion of the hopper 10a, a cutter 10c which opens and closes the opening 10b and cuts the dough F falling through the opening 10b due to its weight, and a roller feeder mechanism 10d which forms the cut dough F into the band-like dough F0 with little stress (see, for example, Patent Publication 2).

The dividing and separating device 12 has a sensor 12a which detects opposed ends of the dough F0 in the width direction to obtain a center of the dough F0 in the width direction, a centering device 12b which register the dough F0 to a predetermined position (for example, see Patent Publication 3), a circular cutter 12c which cuts the center of the registered dough F0 in the width direction into two rows along a feeding direction, and a pair of expanding conveyors 12d which separates the cut doughs F1 in the width direction.

The feeding conveyor 14 is disposed adjacent to the circular cutter 12c and located below the expanding conveyors 12d. The doughs F1 divided by the circular cutter 12c are fed on the feeding conveyor 14, then separated in the width direction on the expanding conveyors 12d, and again fed on the feeding conveyor 14.

The weighing and cutting section 4 includes a first row (not-operation side) weighing and cutting section 20a and a second row (operation side) weighing and cutting section 20b. The first row weighing and cutting section 20a and the second row weighing and cutting section 20b have similar structures. A character "a" is added to elements of the first row weighing and cutting section 20a, while a character "b" is added to elements of the second row weighing and cutting section 20b.

The weighing and cutting section 20a, 20b has a shorter upstream conveyor 22a, 22b with a weighing function, a longer downstream conveyor 24a, 24b with a weighing function, and a cutting device 26a, 26b disposed adjacent to and upstream of the upstream conveyor 22a, 22b. The upstream conveyor 22a, 22b measures a weight of the band-like dough F1 in order to cause a cutting signal for cutting the band-like dough F1 so that the cut dough has a predetermined weight. The downstream conveyor 24a, 24b has a weight checking function of measuring a weight of the cut dough F2. When the predetermined weight is heavy so that a length of the cut dough F2 is longer than a length of the upstream conveyor 22a, 22b, the downstream conveyor 24a, 24b also has a function of measuring the weight of the band-like dough F1. The cutting device 26a, 26b has a blade 28a, 28b which is operated in a way of a guillotine.

The upstream conveyor 22a, 22b has a weighing sensor 30a, 30b which measures the weight of the dough F1, and an upstream sensor 32a, 32b which detects whether or not the dough F1 reaches the output of the upstream conveyor 22a, 22b. The upstream conveyor 22a, 22b can be switched between a low-speed operation and a high-speed operation.

The downstream conveyor 24a, 24b has a weighing sensor 34a, 34b which measures the weight of the cut dough F2 and the band-like dough F1, and an downstream sensor 36a, 36b which detects whether or not the cut dough F2 reaches the output of the downstream conveyor 24a, 24b. The downstream conveyor 24a, 24b can be switched between a low-speed operation and a high-speed operation.

The discharging section 6 has a feeding conveyor 40 which feeds the cut doughs F2 discharged from the downstream conveyors 24a, 24b, and a V-belt type rounding conveyor 42 which extends perpendicular to the feeding conveyor 40.

Further, a controller 44, which controls the above-stated elements, is provided.

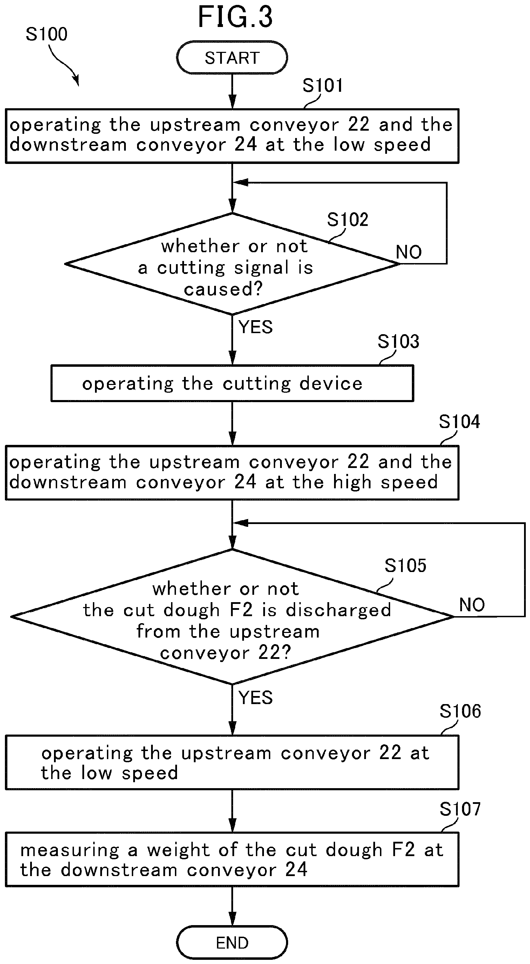

Next, referring to Fig. 3, a weighing and cutting operation S100 of the weighing and cutting section 20a, 20b will be explained. An operation of the first row weighing and cutting section 20a and an operation of the second row weighing and cutting section 20b are common to each other and are performed independently. The explanation will be done without the characters "a" and "b". Further, a target cutting weight and a target production volume (or a target cutting number per a unit time or a cycle time between cutting events which can achieve the target cutting number) is previously set.

In S101, by operating the upstream conveyor 22 and the downstream conveyor 24 at a low speed, the dough F1 is allowed to enter the upstream conveyor 22. In S102, whether or not the cutting signal is caused is confirmed. When the cutting signal is not caused, the control is returned to S102. If the target cutting weight is relatively light and the length of the cut dough F2 is shorter than the length of the upstream conveyor 22, the cutting signal would be caused based on comparison between a measuring weight of the upstream conveyor 22 and the target cutting weight. If the target cutting weight is relatively heavy and the length of the cut dough F2 is longer than the length of the upstream conveyor 22, the cutting signal would be caused based on comparison between a measuring weight of both of the upstream conveyor 22 and the downstream conveyor 24 and the target cutting weight. In S103, when the cutting signal is caused, the cutting device 26 is operated to cut the dough F1. Then, in S104, the upstream conveyor 22 and the downstream conveyor 24 are operated at a high speed to separate the cut dough F2 from the next dough F1. Then, in S105, whether or not the cut dough F2 is discharged from the upstream conveyor 22 is confirmed. When the cut dough F2 has not been discharged from the upstream conveyor 22, the control is returned to S105. Then, in S106, when the cut dough F2 has been discharged from the upstream conveyor 22, the upstream conveyor 22 is operated at the low speed. Further, in S107, a weight of the cut dough F2 is measured by the downstream conveyor 24. Based on the measured weight of the cut dough F2, setting values of the production volume and the cutting weight are preferably feedback controlled.

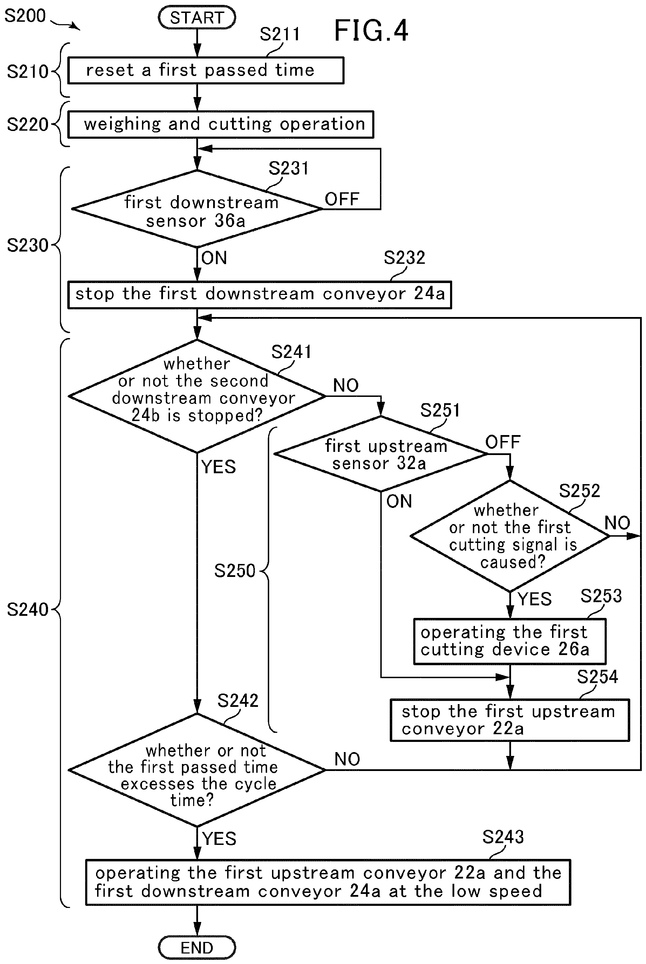

Next, referring to Fig. 4, a weighing and cutting operation and a discharging operation of the first row S200 will be explained. In the present embodiment, the first row is operated as a reference row.

In S210, settings are initialized. Concretely, in S211, a first passed time which is a passed time from the previous cutting event, is reset to zero.

Then, in S220, the weighing and cutting operation is performed. The weighing and cutting operation is similar to the above-stated weighing and cutting operation S100. This makes the cut dough F2.

Then, in S230, the cut dough F2 is stopped at the outlet of the first downstream conveyor 24a. Concretely, in S231, whether or not the first downstream sensor 36a becomes ON is confirmed. When the first downstream sensor 36a is OFF, the control is returned to S231. When the first downstream sensor 36a becomes ON, since the cut dough F2 reaches the outlet of the first downstream conveyor 24a, in S232, the first downstream conveyor 24a is stopped.

Then, in S240, the cut dough F2 is discharged from the first downstream conveyor 24a at a predetermined timing. Concretely, in S241, whether or not the second (operation side) downstream conveyor 24b is stopped is confirmed. Namely, whether or not the cut dough F2 is stopped at the outlet of the second downstream conveyor 24b is confirmed. When the second downstream conveyor 24b is not stopped, the control is moved to S251 explained later. When the second downstream conveyor 24b is stopped, the cut doughs F2 are stopped at both of the outlets of the first downstream conveyor 24a and the second downstream conveyor 24b.

Then, in S242, whether or not the first passed time excesses the cycle time is confirmed. When the first passed time does not excess the cycle time, the control is returned to S241. When the first passed time excesses the cycle time, in S243, the first downstream conveyor 24a is operated at the low speed. This allows the cut dough F2 to be discharged from the first downstream conveyor 24a. Further, when the first upstream conveyor 22a is stopped (in case of S254 explained later), the first upstream conveyor 22a is operated at the low speed.

And now, in S241, when the first downstream conveyor 24a is stopped and the second downstream conveyor 24b is not stopped, the next dough F1 or the cut dough F2 may enter the first downstream conveyor 24a. Thus, in a specific case explained below, in S250, the first upstream conveyor 22a is stopped.

Concretely, in S251, whether or not the first upstream sensor 32a becomes ON is confirmed. When the length of the cut dough F2 is longer than the length of the first upstream conveyor 22a, the next dough F1 allows the first upstream sensor 32a to become ON. Then, in S254, the first upstream conveyor 22a is stopped so that the next dough F1 is prevented from entering the first downstream conveyor 24a.

Further, when the first upstream sensor 32a is OFF, in S252, whether or not a first cutting signal is caused is confirmed. When the first cutting signal is not caused, the control is returned to S241. When the length of the next cut dough F2 is shorter than the length of the first upstream conveyor 22a, the first cutting signal is caused. Then, in S253, the first cutting device 26a is operated, and in S254, the first upstream conveyor 22a is stopped. Thus, the next cut dough F2 is stopped where it is cut. Namely, unlike S104, the next cut dough F2 is prevented from entering the first downstream conveyor 24a due to the operation of the first upstream conveyor 22a at the high speed.

Also, when the first upstream conveyor 22a is stopped, the second upstream conveyor 22b and the feeding section 2 are synchronously stopped. After S243, the weighing and cutting operation and the discharging operation of the first row S200 is repeated.

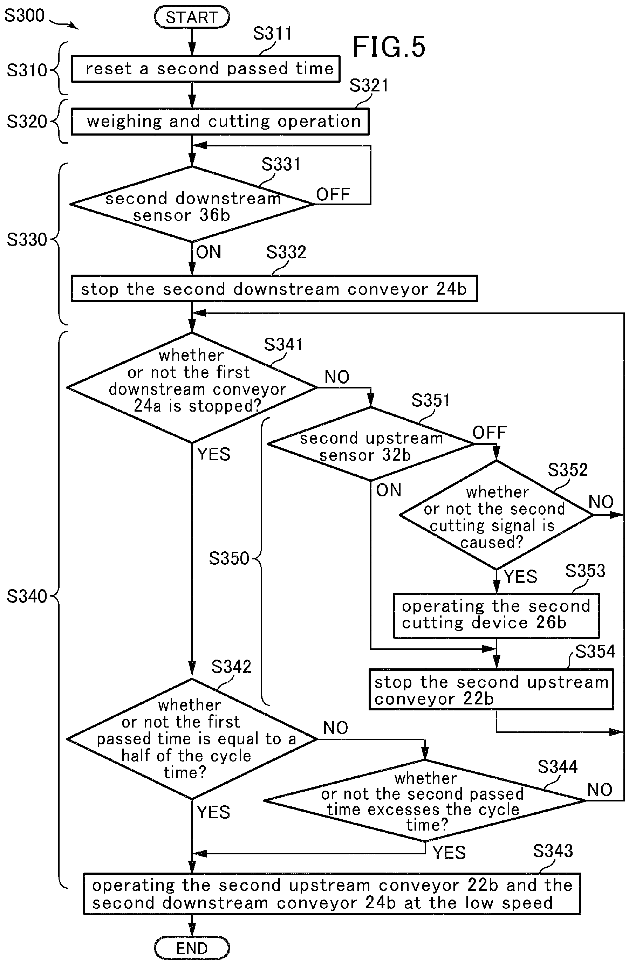

Next, referring to Fig. 5, a weighing and cutting operation and a discharging operation of the second row S300 will be explained. Since S310, S320, S330 and S350 are respectively common to S210, S220, S230 and S250 in the weighing and cutting operation and the discharging operation of the first row S200, explanations of S310, S320, S330 and S350 are omitted.

In S340, the cut dough F2 is discharged from the second downstream conveyor 24b at a predetermined timing. Concretely, in S341, whether or not the first (not-operation side) downstream conveyor 24a is stopped is confirmed. Namely, whether or not the cut dough F2 is stopped at the outlet of the first downstream conveyor 24a is confirmed. When the first downstream conveyor 24a is not stopped, the control is moved to S351. When the first downstream conveyor 24a is stopped, the cut doughs F2 are stopped at both of the outlets of the first downstream conveyor 24a and the second downstream conveyor 24b.

Then, in S342, whether or not the first passed time is equal to one-half of the cycle time is confirmed. When the first passed time is not equal to the one-half of the cycle time, the control is moved to S344 explained later. When the first passed time becomes to be equal to one-half of the cycle time, in S343, the second downstream conveyor 24b is operated at the low speed. Thus, the cut dough F2 is discharged from the second downstream conveyor 24b. Further, when the second upstream conveyor 22b is stopped (in case of S354), the second upstream conveyor 22b is operated at the low speed.

After the cut dough F2 is discharged from the second downstream conveyor 24b and before the first cutting signal is caused, if the cut dough F2 reaches the outlet of the second downstream conveyor 24b and in S354, the second upstream conveyor 22b is stopped, the first passed time would be kept excessing one-half of the cycle time, so that the cut dough F2 could not be discharged from the second downstream conveyor 24b. Further, in this situation, since the first upstream conveyor 22a is also stopped, in S241 and S341, the cut doughs F2 could not be stopped at both of the outlets of the first downstream conveyor 24a and the second downstream conveyor 24b, so that the cut dough F2 could not be also discharged from the first downstream conveyor 24a. As a result, no cut doughs could be discharged from the first downstream conveyor 24a and the second downstream conveyor 24b.

Therefore, in S344, whether or not a second passed time excess the cycle time is confirmed. When the second passed time does not excesses the cycle time, the control is returned to S341. When the second passed time excesses the cycle time, in S343, the second downstream conveyor 24b is operated at the low speed. This allows the cut dough F2 to be discharged from the second downstream conveyor 24b. Further, when the second upstream conveyor 22b is stopped (in case of S354), the second upstream conveyor 22b is operated at the low speed.

In the weighing, cutting and arranging system 1 operated in this way, since the first downstream conveyor 24a and the second downstream conveyor 24b have the function of stopping the cut doughs F2 at the respective outlets, they have both of the function of the weighing conveyor and the function of the arranging conveyor. Further, since the first upstream conveyor 22a and the second upstream conveyor 22b have the function of stopping the band-like dough F1 at the respective outlets, they have both of the function of the weighing conveyor and the function of the arranging conveyor. Thus, the length of the weighing, cutting and arranging system 1 can be shorten.

Further, in S241 and S341, a situation is made in which the cut doughs F2 are stopped at both of the outlets of the first downstream conveyor 24a and the second downstream conveyor 24b. This situation defines the reference timing, and by using the reference timing in the first row which is the reference row, the cut doughs F2 which are stopped at the outlet of the first downstream conveyor 24a are discharged with a period which is at least the cycle time. In contrast, in the second row which is not the reference row, the cut dough F2 which is stopped at the outlet of the second downstream conveyor 24b is discharged after a period which is one-half of the cycle time with respect to the reference timing. Thus, there is a sufficient space between the cut dough F2 discharged from the second downstream conveyor 24b and the cut dough F2 discharged from the first downstream conveyor 24a. This prevents the plurality of cut dough F2 from adhering each other to integrate together.

The embodiment of the present invention has been explained, but the present invention is not limited to the above-stated embodiments and a variety of modification can be made within and should be covered by the scope of the claims.

In the above-stated embodiment, although the V-belt type rounding conveyor 42 of the discharging section 6 extends perpendicular to the feeding conveyor 40, it may extend in the same direction as that of the feeding conveyor 40.

In the above-stated embodiment, in S342, the cut dough F2 on the second downstream conveyor 24b is discharged with a period which is one-half of the cycle time with respect to the above-stated reference timing. But, unless the plurality of cut doughs F2 adhere each other to integrate together, the cut dough F2 on the second downstream conveyor 24b may be discharged with a period which is shorter or longer than one-half of the cycle time. Such a period may be appropriately set by the control device 44.

In the above-stated embodiment, in S344, whether or not the second passed time excesses the cycle time is confirmed. But, unless the plurality of cut doughs F2 adhere each other to integrate together, whether or not the second passed time excesses a time which is shorter or longer the cycle time may be confirmed.

In the above-stated embodiment, the deposited dough F0 is divided into two rows in the width direction, but it may be divided into more than two rows. For example, when three rows of the band-like dough F1 is fed from the feeding section to the weighing and cutting section, the weighing and cutting section has first-row, second-row and third-row weighing and cutting sections. The weighing and cutting section of each row has a shorter conveyor with a weighing function, a longer conveyor with a weighing function, and a cutting device disposed adjacent to and upstream of the upstream conveyor.

The first-row weighing and cutting section of the three weighing and cutting sections is defined as the reference row. A situation in which the cut doughs are stopped at all rows of the outlets of the downstream conveyors defines the reference timing, and by using the reference timing, the cut dough is discharged from the first row downstream conveyor, the first row being the reference row. Then, the cut dough of the second row is discharged with a period of one-third of the cycle time from the reference timing, and the cut dough of the third row is discharged with a period of two-third of the cycle time from the reference timing. Unless the plurality of the cut doughs adhere each other to integrate together, for example, in the second row, such a period may be shorter or longer than one-third of the cycle time from the reference timing. A system with four or more rows are similar to that with three rows.

## Claims

1. A weighing, cutting and arranging system (1) comprising:
a feeding section (2) in which multiple rows of band-like dough (F1) are fed;
a weighing and cutting section (4) in which the dough (F1) of each row is cut so as to have a predetermined weight; and
a discharging section (6) in which cut doughs (F2) of the multiple rows are discharged in a single line;
wherein each row of the weighing and cutting section (4) has a shorter upstream conveyor (22a, 22b) with a weighing function, a longer downstream conveyor (24a, 24b) with a weighing function disposed downstream of the upstream conveyor (22a, 22b), and a cutting device (26a, 26b) disposed upstream of and adjacent to the upstream conveyor (22a, 22b), and operations of the multiple rows of the weighing and cutting section (4) are performed independently,
**characterized in that**
the weighing, cutting and arranging system (1) is configured to operate in such a way that
one of the multiple rows is defined as a reference row,
at the multiple rows of the weighing and cutting section (4) which operations are performed independently, after the cut doughs (F2) of the all rows are stopped at outlets of the respective downstream conveyors (24a, 24b), the cut dough (F2) of the reference row is discharged, and
after the cut dough (F2) of the reference row is discharged, the cut dough(s) (F2) of the other row(s) is/are discharged in a sequential order with a predetermined period.

2. The weighing, cutting and arranging system (1) according to claim 1, wherein when in one of the rows, the cut dough (F2) is stopped at the outlet of the downstream conveyor and the following dough (F1) is cut, the upstream conveyors (22a, 22b) of the all rows are stopped.

3. The weighing, cutting and arranging system (1) according to claim 1, wherein when in one of the rows, the cut dough (F2) is stopped at the outlet of the downstream conveyor (24a, 24b) and the following dough (F1) reaches the outlet of the upstream conveyor (22a, 22b), the upstream conveyors (22a, 22b) of the all rows are stopped.

## Patentansprüche

1. Wiege-, Schneid- und Anordnungssystem (1), umfassend:
einen Zuführabschnitt (2), in den Mehrfachreihen von bandförmigem Teig (F1) zugeführt werden;
einen Wiege- und Schneidabschnitt (4), in dem der Teig (F1) jeder Reihe so geschnitten wird, dass er ein vorbestimmtes Gewicht hat; und
einen Austragungsabschnitt (6), in dem geschnittene Teige (F2) von Mehrfachreihen in einer einzigen Linie ausgetragen werden;
wobei jede Reihe des Wiege- und Schneidabschnitts (4) einen kürzeren vorgelagerten Förderer (22a, 22b) mit einer Wiegefunktion, einen längeren nachgelagerten Förderer (24a, 24b) mit einer Wiegefunktion, der dem vorgelagerten Förderer (22a, 22b) nachgelagert angeordnet ist, und eine Schneidvorrichtung (26a, 26b) hat, die dem vorgelagerten Förderer (22a, 22b) vorgelagert und benachbart zu diesem angeordnet ist, und Arbeitsabläufe der Mehrfachreihen des Wiege- und Schneidabschnitts (4) werden unabhängig voneinander durchgeführt,
**dadurch gekennzeichnet, dass**
das Wiege-, Schneid- und Anordnungssystem (1) konfiguriert ist so zu arbeiten, dass
eine der Mehrfachreihen als eine Referenzreihe definiert ist,
an den Mehrfachreihen des Wiege- und Schneidabschnitts (4), deren Arbeitsabläufe unabhängig voneinander arbeiten, nachdem die geschnittenen Teige (F2) aller Reihen an den Ausgängen der jeweiligen nachgelagerten Förderer (24a, 24b) angehalten worden sind, der geschnittene Teig (F2) der Referenzreihe ausgetragen wird, und
nachdem der geschnittene Teig (F2) der Referenzreihe ausgetragen ist, wird/werden der/die geschnittene(n) Teig(e) (F2) der anderen Reihe(n) in einer sequentiellen Reihenfolge mit einer vorgegebenen Zeitspanne ausgetragen.

2. Wiege-, Schneid- und Anordnungssystem (1) nach Anspruch 1, wobei, wenn in einer der Reihen der geschnittene Teig (F2) am Ausgang des nachgelagerten Förderers angehalten wird und der folgende Teig (F1) geschnitten wird, die vorgelagerten Förderer (22a, 22b) aller Reihen angehalten werden.

3. Wiege-, Schneid- und Anordnungssystem (1) nach Anspruch 1, wobei, wenn in einer der Reihen der geschnittene Teig (F2) am Ausgang des nachgelagerten Förderers (24a, 24b) angehalten wird und der folgende Teig (F1) den Ausgang des vorgelagerten Förderers (22a, 22b) erreicht, die vorgelagerten Förderer (22a, 22b) aller Reihen angehalten werden.

## Revendications

1. Système de pesage, de coupe et d'agencement (1) comprenant :
une section d'alimentation (2), dans laquelle des rangées multiples de pâte en forme de bande (F1) sont alimentées ;
une section de pesage et de coupe (4), dans laquelle la pâte (F1) de chaque rangée est coupée de manière à avoir un poids prédéterminé ; et
une section de décharge (6), dans laquelle les pâtes coupées (F2) des rangées multiples sont déchargées en une seule ligne ;
dans lequel chaque rangée de la section de pesage et de coupe (4) a un convoyeur amont plus court (22a, 22b) avec une fonction de pesage, un convoyeur aval plus long (24a, 24b) avec une fonction de pesage disposé en aval du convoyeur amont (22a, 22b), et un dispositif de coupe (26a, 26b) disposé en amont de et adjacent au convoyeur amont (22a, 22b), et les opérations des rangées multiples de la section de pesage et de coupe (4) sont effectuées indépendamment,
**caractérisé en ce que**
le système de pesage, de coupe et d'agencement (1) est configuré pour fonctionner de manière à ce que
l'une des rangées multiples est définie comme une rangée de référence,
au niveau des rangées multiples de la section de pesage et de coupe (4), dont les opérations sont effectuées indépendamment, après que les pâtes coupées (F2) de toutes les rangées sont arrêtées aux sorties des convoyeurs aval respectifs (24a, 24b), la pâte coupée (F2) de la rangée de référence est déchargée, et
après que la pâte coupée (F2) de la rangée de référence ait été déchargée, la/les pâte(s) coupée(s) (F2) de l'/des autre(s) rangée(s) est/sont déchargée(s) dans un ordre séquentiel avec une période prédéterminée.

2. Système de pesage, de coupe et d'agencement (1) selon la revendication 1, dans lequel, lorsque dans l'une des rangées, la pâte coupée (F2) est arrêtée à la sortie du convoyeur aval et que la pâte suivante (F1) est coupée, les convoyeurs amont (22a, 22b) de toutes les rangées sont arrêtés.

3. Système de pesage, de coupe et d'agencement (1) selon la revendication 1, dans lequel, lorsque dans l'une des rangées, la pâte coupée (F2) est arrêtée à la sortie du convoyeur aval (24a, 24b) et que la pâte suivante (F1) atteint la sortie du convoyeur amont (22a, 22b), les convoyeurs amont (22a, 22b) de toutes les rangées sont arrêtés.
